# EUROPEAN PATENT APPLICATION

(11) **EP 4 249 143 A1**
(43) Date of publication of application: **27.09.2023**
(21) Application number: 23162293.7
(22) Date of filing: 16.03.2023
(51) Int. Cl.: B21C 51/00, B21B 37/16, B21B 38/04, B21B 38/00, B25J 9/16

(54) **APPARATUS AND METHOD FOR CARRYING OUT MEASUREMENTS ON A MATERIAL BEING PROCESSED IN A ROLLING PLANT**

(30) Priority: 24.03.2022 IT 202200005888
(71) Applicant: BM Group Holding S.p.A., 38083 Borgo Chiese (TN) (IT)
(72) Inventor: BOTTINI, Mirko, 38083 Borgo Chiese (TN) (IT); MACCANI, Gianluca, 38089 Storo (TN) (IT); TONINI, Andrea, 38089 Storo (TN) (IT)
(74) Representative: Cosenza, Simona

(57) **Abstract**

An apparatus for carrying out measurements on a material being processed in a rolling plant which comprises a plurality of rolling mill stands (11,12,13,14) placed in succession along a line, wherein the apparatus comprises a robotic arm (17,18) which is adapted to move parallel to said line and which is movable between a position of insertion between two adjacent stands of the succession of rolling mill stands (11,12,13,14) and a position of extraction from said adjacent stands wherein the robotic arm (17,18) carries a measuring device (20) provided with sensor means (23) adapted to perform measurements on the material being processed, the robotic arm (17,18) being adapted to position the measuring device (20) at the material being processed (22), when it is in said position of insertion between two adjacent stands, so that said sensors means (23) perform the desired measurements on the material being processed and to move parallel to the line when it is in the position of extraction from the two adjacent stands.

## Description

The present invention refers to an apparatus and method for carrying out measurements on a material being processed in a rolling plant.

The metal rolling process (ferrous and non-ferrous) involves the plastic deformation and elongation by compression, between two or more rolling rolls, of a semi-finished product, normally called billet, bloom or slab, previously heated.

Normally the rolling mill stands, which can have different construction forms, are placed in line and each one provides for a partial reduction in the section of the rolled material and the consequent elongation thereof, also entailing an increase in the output speed.

The rolling mill stands are normally fitted with suitably shaped rolls in order to obtain the desired plastic deformation, or section of the material. The gap between these rolls is normally adjustable manually or via actuators (electric, pneumatic, hydraulic).

During the rolling process the gap between these rolls and/or the section of the output material must be periodically checked on several points of the plant, in fact the variables affecting the deformations are several such as wear of the rolls, chemical and mechanical characteristics of the rolled material, temperature of the rolled material, deformation of the equipment according to the working conditions.

The prior art in order to be able to carry out the measurement between different rolling mill stands requires that the operator approaches the incandescent material and the equipment in motion and carries out a procedure in which he places a more malleable third material (traditionally a wooden board) and burns it until he obtains a "negative" of the rolled section and then measures it outside the line in order to verify its value.

A further technique may be to stop rolling and perform the rolling of a sample of a cold material whose characteristics are similar to the rolled product (in the case of steel, the trend is to use lead).

There are fixed methods for measuring the section, which are usually mounted only at the end of the process, at the exit of the last rolling mill stand, to verify that what has been produced complies with the tolerance with respect to the customer's requests and/or the standards governing the finished product.

The need to access the stands frequently for the removal of the same or of the rolls by means of overhead cranes and other moving parts, the length of the plants and the constant risk of jams that project incandescent material outside the normal rolling path do not generally allow the installation of fixed measuring devices.

The main disadvantage in the case of the measurement being carried out in the line concerns the safety of the operators involved, who are exposed to high risks of being crushed and/or dragged in parts moving at high speed, or of being hit by incandescent material in case of jam of the rolled product and exposure to high temperatures.

There is also a significant loss in productivity if, on the other hand, it is decided to carry out the measurements with the rolling plant stopped or at low speed.

Apparatuses and measurement methods as described in DE202016104064U1, WO2021/224950A1, WO95/04914A1, US3474668, KR20040056825A and WO2017/156122A1 are then known.

The apparatus according to the present invention provides for the use of an autonomous vehicle able to move freely near the rolling mill stands and advantageously consisting of a carriage on which a robotic arm carrying a device for measuring and/or analysing the product is installed. The vehicle with the robotic arm can be driven to the correct point also through a scanning or vision system.

The vehicle has the peculiarity of moving autonomously or semi-autonomously, thus approaching the measurement point, and, in the second instance, the robotic arm will be activated locating the point to be scanned and moving the measuring device in position at the material being processed in order to verify the plastic deformation at the exit from the rolling mill rolls, its section and/or by carrying out a surface defect analysis thereof.

For these and further purposes which will be better understood hereinafter, the invention envisages realizing an apparatus for carrying out measurements on a material being processed in a rolling plant according to claim 1.

Further characteristics are the object of the dependent claims.

For these and further purposes which will be better understood hereinafter, the invention envisages providing a method for carrying out measurements on a material being processed in a rolling plant according to claim 11.

The invention will now be described in some, but certainly not limiting embodiments, with reference to the accompanying drawings in which:
Fig. 1 illustrates the apparatus according to the invention in a first embodiment mounted along a schematized rolling mill line;
Fig. 2 is an enlarged view of the detail A of the measuring device mounted on the apparatus of Fig. 1,
Fig. 3 and 4 are partially sectioned views of the measuring device in two different embodiments.
Fig. 5 and 6 illustrate the apparatus according to the invention in a second and third embodiment also mounted along a schematized rolling mill line.

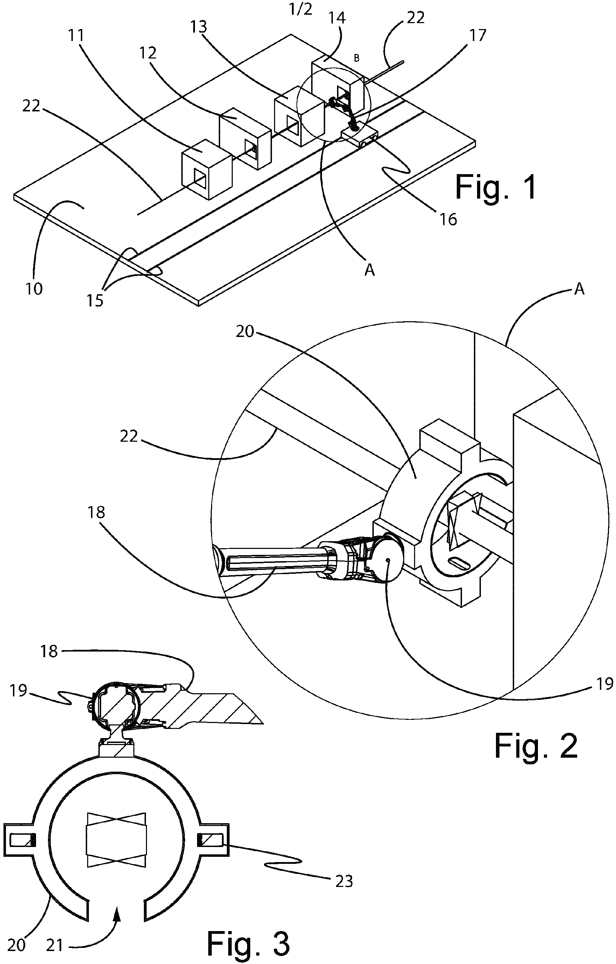

Fig. 1 shows a rolling mill plant which, in a fully known manner, comprises a plurality of rolling mill stands 11, 12, 13, 14 placed in succession one after the other spaced apart along a line to form a rolling mill line 10 along which a material being processed 22 advances.

As schematized, the rolling mill stands 11, 12, 13, 14, having different constructional shapes and different functional characteristics, are arranged in succession spaced apart from each other along the line and each one of them provides for a partial reduction in the section of the material being processed 22, for example a bar, and the consequent elongation thereof, also entailing an increase in the output speed. Obviously, the rolling mill stands may also be in greater or lesser number than those schematically indicated in Fig. 1.

Next to the rolling mill line 10, but in the vicinity thereof, as illustrated in Fig. 1, there are, for example, two parallel rails 15 along which a vehicle moves, which vehicle consists of a carriage 16 on which a robotic arm or robot 17 is mounted, whose arm 18 carries hinged, at the free end thereof 19, a measuring device 20 that can assume different configurations depending on the measurement needs.

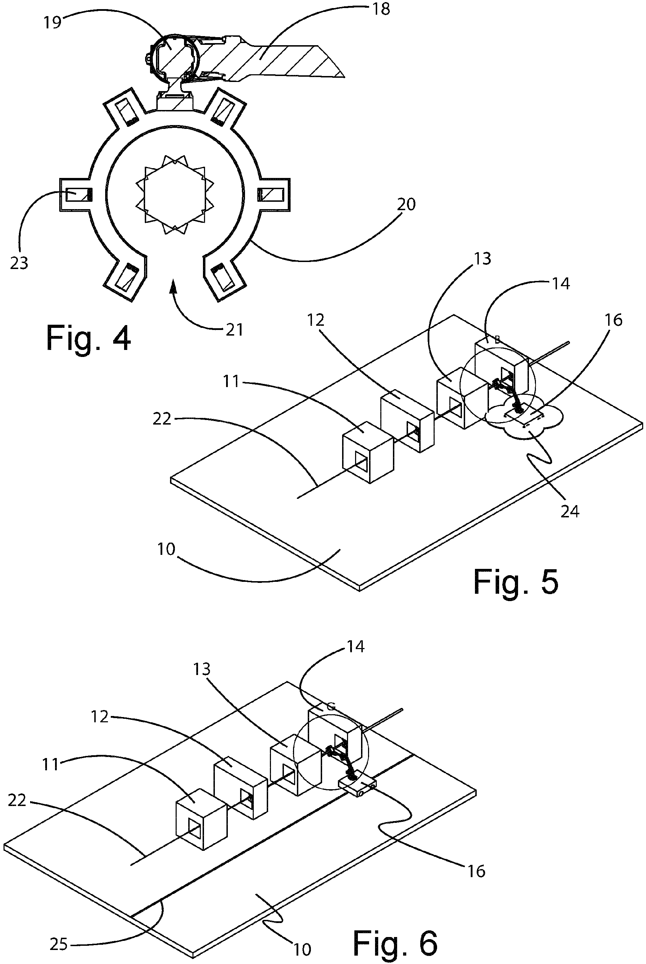

As can be seen in Figs. 3 and 4, the measuring device 20 advantageously has an externally circular ring configuration open along a short stretch 21, but sufficient to be fitted on the material being processed 22 which advances along the rolling mill line 10.

It is understood that the configuration of the circular ring measuring device 20 is given by way of example as it seems to be the simplest and most advantageous to realize, but countless other configurations are possible, provided that they allow the aim of correctly measuring the material being processed to be reached.

Figures 3 and 4 illustrate, by way of example, two different embodiments of the measuring device 20.

The measuring device 20 is provided with sensor means 23 configured to detect characteristic parameters of the material being processed 11, such as, for example, the plastic deformation undergone, the section, advantageously the profile and/or the dimensions of the cross-section and/or surface defects.

Fig. 3 illustrates a measuring device 20 in which two diametrically opposed sensors 23 are provided, while Fig. 4 illustrates a measuring device 20 in which six equally spaced sensors 23 are provided. In both cases, the sensors 23 are adapted to verify the plastic deformation at the exit of the rolling cylinders, the section and/or carrying out a surface defect analysis.

It is clear that these are only some of the possible configurations of the measuring device as well as of the type and number of sensors mounted on it, since the number and the arrangement of the sensors along the measuring device 20 will depend on several factors, such as the dimensions and the configuration of the bar, or in any case of the material being processed 22, and the type of verification that is to be carried out on it.

According to the invention, the vehicle consisting of carriage 16 and robot 17 is an autonomous vehicle able to move freely near the rolling mill cages; the robot 17, as mentioned, is provided with a measuring device 20 and, normally, with a 2D or 3D scanning or vision system to guide the carriage 16 and the robotic arm 17,18 to the correct point. The carriage 16, therefore, will be able to move autonomously approaching the measuring point between two adjacent rolling mill stands 11,12,13,14; subsequently, the robotic arm 17,18 will be activated locating the point to be scanned and moving the measuring system 20 in position around the bar 22 in order to verify the plastic deformation at the exit of the rolling cylinders, the section and/or carrying out a surface defect analysis.

The robotic arm 17,18, as a whole or even only the arm 18 thereof, is movable between a position of insertion between two adjacent stands of the succession of rolling mill stands 11,12,13,14 and a position of extraction from the two adjacent stands.

In the insertion position, the robotic arm 17,18 extends into the space between the two adjacent stands so as to arrange the measuring device 20 at the material being processed 22 in order to carry out the desired measurements.

In the extraction position, the robotic arm 17,18 is completely extracted outside the space between the two adjacent stands so that the entire robotic arm 17,18 can be moved along the rolling mill line 10 for example to be arranged at the adjacent rolling mill stands of another pair of rolling mill stands of the rolling mill line 10.

Since it is able to move freely along the rails 15, the carriage 16 will be able to position itself between any two of the rolling mill stands placed along the line.

With a single robotic arm 17,18 and thus with a single measuring device 20, it is possible to carry out measurements at different positions between two adjacent rolling mill stands and/or between different pairs of adjacent rolling mill stands.

Figs. 5 and 6 illustrate how the carriage 16 can move parallel to the rolling line 10 also with other means; for example, as schematized in Fig. 5, by means of an artificial vision system 24 or, as schematized in Fig. 6, by following an optical line or magnetic strip 25 read by a sensor placed on the carriage 16.

The carriage 16 may be constituted by an automatic guided vehicle. Also in this case the embodiments of the movement system of the carriage 16 are given by way of example, but certainly not by way of limitation, as further different methods for advancing the carriage can be adopted depending on the needs and requirements.

According to a preferred embodiment of the invention the robotic arm 17,18 that fits the measuring device 20 also provides a 3D vision system for guiding the carriage and the robotic arm to the correct point.

A robotic arm 17,18 has been described and illustrated as it seems to be the most suitable solution to realize a means of support and transfer of the measuring device 20 between two adjacent rolling mill stands, but it is understood that also any Cartesian multi-axis movement system, of known type, too, constitutes a technical equivalent that falls within the same scope of protection of the invention.

The present invention also relates to a system comprising a rolling plant which comprises a plurality of rolling mill stands placed in succession along a line to form a rolling mill line 10 along which a material being processed 22 advances and an apparatus for carrying out measurements on said material being processed 22 between two adjacent stands of said succession of rolling mill stands as described above, wherein said apparatus is arranged next to the rolling mill line 10.

The present invention also relates a method for carrying out measurements on a material being processed in a rolling plant comprising a plurality of rolling mill stands 11,12,13,14 placed in succession along a line to form a rolling mill line 10, comprising:
- Providing a robotic arm 17,18 which is adapted to move parallel to said rolling mill line and alongside it and which is movable between a position of insertion between two adjacent stands of the succession of rolling mill stands 11,12,13,14 and a position of extraction from the two adjacent stands, the robotic arm 17,18 carrying a measuring device 20 provided with sensor means 23 adapted to perform measurements on the material being processed;
- When the robotic arm 17,18 is in the extraction position, make the robotic arm 17,18 move parallel to the line until it is arranged next to two adjacent rolling mill stands in a position between them;
- Moving the robotic arm 17,18 from the extraction position to the position of insertion between the two adjacent stands bringing the measuring device 20 at the material being processed 22;
- Carrying out measurements on the material being processed 22 by means of the sensor means 23, keeping the robotic arm 17,18 in the insertion position;
- Moving the robotic arm 17, 18 from the insertion position to the extraction position in order to be able to move it again parallel to the line.

## Claims

1. Apparatus for carrying out measurements on a material being processed in a rolling plant comprising a plurality of rolling mill stands (11,12,13,14) placed in succession along a line, wherein said apparatus is **characterized in that** it comprises a robotic arm (17,18) which is adapted to move parallel to said line and which is movable between a position of insertion between two adjacent stands of said succession of rolling mill stands and a position of extraction from said two adjacent stands, said robotic arm (17,18) carrying a measuring device (20) provided with sensor means (23) adapted to perform measurements on said material being processed, wherein said robotic arm (17,18) is adapted to position said measuring device (20) at said material being processed (22), when it is in said position of insertion between said two adjacent stands, so that said sensor means (23) perform the desired measurements on the material being processed, and is adapted to move parallel to said line, when it is in said position of extraction from said two adjacent stands.

2. Apparatus according to claim 1, **characterized in that** said measuring device (20) is hinged to the free end (19) of said robotic arm (17,18) and has an open-ring configuration (21).

3. Apparatus according to claim 2, **characterized in that** said sensor means (23) are distributed along the extension of said ring (21).

4. Apparatus according to any one of the preceding claims, **characterized in that** said robotic arm (17,18) is mounted on a carriage (16) that is movable on rails (15) parallel to said line.

5. Apparatus according to any one of claims 1 to 3, **characterized in that** said robotic arm (17,18) is mounted on a carriage (16) movable parallel to said line, guided by artificial vision systems.

6. Apparatus according to any one of claims 1 to 3, **characterized in that** said robotic arm (17,18) is mounted on a carriage (16) movable parallel to said line, guided by an optical line or magnetic strip (25).

7. Apparatus according to any one of the preceding claims, **characterized in that** said robotic arm (17,18) comprises a two-dimensional or three-dimensional guide scanning or vision system.

8. Apparatus according to any one of claims 4 to 6, wherein said carriage (16) with said robotic arm (17,18) mounted constitutes an autonomous vehicle adapted to move parallel to said line.

9. Apparatus according to any one of the preceding claims, **characterized in that** said sensor means (23) are configured to detect the plastic deformation, the section and/or surface defects of said material being processed.

10. System comprising a rolling plant which comprises a plurality of rolling mill stands placed in succession along a line to form a rolling mill line (10) along which a material being processed (22) advances and an apparatus for carrying out measurements on said material being processed between two adjacent stands of said succession of rolling mill stands according to any one of the preceding claims, wherein said apparatus is arranged next to said rolling mill line (10).

11. Method for carrying out measurements on a material being processed in a rolling plant comprising a plurality of rolling mill stands (11,12,13,14) placed in succession along a line to form a rolling mill line (10), comprising:
- Providing a robotic arm (17,18) which is adapted to move parallel to said line and alongside it and which is movable between a position of insertion between two adjacent stands of said succession of rolling mill stands and a position of extraction from said two adjacent stands, said robotic arm (17,18) carrying a measuring device (20) provided with sensor means (23) adapted to perform measurements on said material being processed,
- When said robotic arm (17,18) is in said extraction position, make said robotic arm (17,18) move parallel to said line until it is arranged next to two adjacent rolling mill stands (11,12,13,14) in a position between them;
- Moving said robotic arm from said extraction position to said position of insertion between said two adjacent stands bringing said measuring device (20) at said material being processed (22);
- Carrying out measurements on said material being processed (22) by means of said sensor means (23), keeping said robotic arm (17,18) in said insertion position;
- Moving said robotic arm (17,18) from said insertion position to said extraction position in order to be able to move it again parallel to said line.
